# EUROPÄISCHE PATENTSCHRIFT

(11) **EP 2 676 361 B1**
(45) Veröffentlichungstag und Bekanntmachung des Hinweises auf die Patenterteilung: **01.04.2015**
(21) Anmeldenummer: 12750719.2
(22) Anmeldetag: 01.08.2012
(51) Int. Cl.: H02N 2/10

(54) **PIEZOELEKTRISCHER DREHANTRIEB FÜR EINE WELLE**
PIEZOELECTRIC ROTARY DRIVE FOR A SHAFT
ENTRAÎNEMENT ROTATIF PIÉZOÉLECTRIQUE POUR UN ARBRE

(30) Priorität: 05.08.2011 DE 102011109590
(43) Veröffentlichungstag der Anmeldung: 25.12.2013
(73) Patentinhaber: Physik Instrumente (PI) GmbH & Co. KG, 76228 Karlsruhe (DE)
(72) Erfinder: HÜBNER, Reinhard, 76337 Waldbronn (DE); MARTH, Harry, 76337 Waldbronn (DE)
(74) Vertreter: Grünecker, Kinkeldey, Stockmair & Schwanhäusser
(86) Internationale Anmeldenummer: PCT/EP2012/065040
(87) Internationale Veröffentlichungsnummer: WO 2013/020873

(56) Entgegenhaltungen:
- EP-A1- 0 863 556
- WO-A2-02/37535
- US-A1- 2010 038 995

## Beschreibung

Die Erfindung betrifft einen piezoelektrischen Drehantrieb für eine Welle, umfassend einen piezoelektrischen Aktor (bzw. Piezoaktor oder Aktor) und einen Kupplungsabschnitt, der zum Antrieb der Welle kraftschlüssig mit der Welle koppelbar ist.

Die US 5,410,206 A offenbart einen piezoelektrischen Drehantrieb für eine Welle, umfassend einen piezoelektrischen Aktor und einen Rahmen mit zwei Klemmbacken, die zum Antrieb der Welle kraftschlüssig mit der Welle koppelbar sind und durch Ansteuerung des Aktors in entgegen gesetzten Richtungen im Wesentlichen tangential zum Umfang der Welle bewegbar sind, so dass die Welle in Drehung versetzt wird.

Dieser Drehantrieb kann aufgrund der geringen Kontaktflächen zwischen den Klemmbacken und der Welle nur geringe Kontaktkräfte übertragen, was als unvorteilhaft angesehen wird.

Der Erfindung liegt die Aufgabe zugrunde, einen piezoelektrischen Drehantrieb für eine Welle bereit zu stellen, der zwischen dem Rahmen und der Welle größere Kontaktkräfte übertragen kann.

Um die der Erfindung zugrunde liegende Aufgabe zu lösen, stellt die Erfindung den piezoelektrischen Drehantrieb für eine Welle nach Anspruch 1 bereit, umfassend wenigstens einen piezoelektrischen Aktor und einen verstellbaren und/oder verformbaren Rahmen mit wenigstens einem Kupplungsabschnitt, der zur Bewerkstelligung eines Haft-Gleit-Antriebs kraftschlüssig mit der Welle koppelbar ist, wobei der Rahmen eine piezoelektrische Verformung des Aktors mechanisch derart übersetzt, dass sich der Kupplungsabschnitt über wenigstens einen Teil des Umfangs der Welle um die Achse der Welle dreht. Im Rahmen der Erfindung kann der Kupplungsabschnitt zur Bewerkstelligung des Haft-Gleit-Antriebs unmittelbar (erstes Ausführungsbeispiel; vgl. Fig. 1, 2a/b) oder mittelbar, insbesondere über ein Zwischenstück (zweites Ausführungsbeispiel; vgl. Fig. 3, 4a/b), kraftschlüssig mit der Welle gekoppelt werden.

Beim sog. Haft-Gleit-Antrieb (bzw. Stick-Slip-Antrieb) findet während der Haft-Phase ein Vorschub der Welle durch den Kupplungsabschnitt statt, während in der Gleit-Phase aufgrund einer Relativbewegung zwischen Kupplungsabschnitt und Welle kein Vorschub der Welle entsteht. Um einen Vorschub zu erreichen, wird der Piezoaktor elektrisch so angesteuert, dass er sich relativ langsam ausdehnt oder zusammenzieht, so dass aufgrund der Reibung zwischen dem Kupplungsabschnitt und der anzutreibenden Welle eine Mitnahme der Welle durch die entsprechende Bewegung des Kupplungsabschnitts erfolgt. Diese Phase wird als Haft-Phase bezeichnet. In der sich anschließenden Gleit-Phase erfolgt hingegen eine elektrische Ansteuerung des Piezoaktors derart, dass er sich schnell zusammenzieht oder ausdehnt, so dass aufgrund der Trägheit der Welle diese durch die entsprechende schnelle Bewegung des Kupplungsabschnitts nicht mitgenommen wird und der Kupplungsabschnitt entlang der Welle gleitet. Der Antrieb funktioniert dabei in beiden Richtungen, d.h. entweder dehnt sich der Piezoaktor zunächst langsam aus und zieht sich anschließend schnell zusammen oder umgekehrt. Das Ausdehnen und Zusammenziehen des Piezoaktors infolge der elektrischen Ansteuerung wird nachstehend als piezoelektrische Verformung des Aktors bezeichnet. Vorzugsweise dreht sich der Kupplungsabschnitt in der Haft-Phase mit der Welle bzw. mit derselben Winkelgeschwindigkeit wie die Welle um deren Achse, so dass keine Relativbewegung zwischen dem Kupplungsabschnitt und der Welle auftritt. Als Welle wird im Rahmen der Erfindung jedes stabförmige Maschinenelement zum Weiterleiten von Drehbewegungen und Drehmomenten sowie zur Lagerung von rotierenden Teilen bezeichnet, insbesondere auch eine Achse oder ein Schaft. Die Welle kann auch als Hohlwelle ausgebildet sein. Zudem bezeichnet der Begriff "Welle" ein stabförmiges Maschinenelement, das dazu dient, eine rotatorische Bewegung in eine translatorische Bewegung umzusetzen.

Bei dem erfindungsgemäßen piezoelektrischen Drehantrieb übernimmt der Rahmen im Wesentlichen eine vergleichbare Funktion wie ein Kurbeltrieb bei Kraftmaschinen, da er eine oszillierende translatorische Bewegung in eine rotatorische Bewegung übersetzt. Bei der erfindungsgemäßen Lösung wird insbesondere eine Umwandlung der oszillierenden translatorischen piezoelektrischen Verformung des Aktors in die rotatorische Bewegung des Kupplungsabschnitts bewirkt. Dadurch kann sich der Kupplungsabschnitt in der Haft-Phase gemeinsam mit der Welle um deren Achse drehen, so dass eine Relativbewegung zwischen dem Rahmen und der Welle in der Haft-Phase verhindert oder zumindest weitgehend verringert wird. Dabei kann der Kupplungsabschnitt großflächig in Anlage mit dem Umfang der Welle gebracht werden und größere Kontaktkräfte übertragen, als dies bei einem herkömmlichen piezoelektrischen Drehantrieb der Fall wäre.

Vorteilhafte Ausführungsformen sind Gegenstand der Unteransprüche.

Es kann von Vorteil sein, wenn der Kupplungsabschnitt über ein Gelenk, vorzugsweise über ein Festkörpergelenk, mit wenigstens einem anderen Abschnitt des Rahmens gelenkig verbunden ist, so dass der Kupplungsabschnitt und der andere Abschnitt des Rahmens über das Gelenk gegeneinander verschwenkbar sind. Durch das Gelenk kann die piezoelektrische Verformung des Aktors besonders einfach und nahezu ohne Energieverluste in eine Drehbewegung um die Achse der Welle übersetzt werden.

Es kann sich als nützlich erweisen, wenn sich das Gelenk beim Verschwenken des Kupplungsabschnitts gegen den anderen Abschnitt des Rahmens im Wesentlichen in Umfangsrichtung der Welle verschiebt. Dadurch kann die Drehbewegung des Kupplungsabschnitts um die Achse der Welle optimal geführt werden, und es resultiert ein besonders effektiver Antrieb.

Erfindungsgemäß ist vorgesehen, daß eine Feder, vorzugsweise dieselbe Feder, den Kupplungsabschnitt und die Welle und/oder den Aktor und/oder den anderen Abschnitt des Rahmens zueinander vorspannt. Dieser andere Abschnitt des Rahmens ist vorzugsweise ein Abstützabschnitt, der bezüglich eines feststehenden Strukturteils momentabgestützt ist. Dadurch kann auch der Abstützabschnitt eine Drehbewegung bzw. Schwenkbewegung ausführen, die in positiver Weise die Schwenkbewegung des Kupplungsabschnitts unterstützt. Die Feder vergrößert die Anpresskraft zwischen dem Kupplungsabschnitt und der Welle. Dadurch kann auch die Haftkraft zwischen dem Kupplungsabschnitt und der Welle erhöht werden, so dass der Kupplungsabschnitt in der Haft-Phase schneller bewegt werden kann, ohne gegenüber der Welle zu gleiten. Durch die Verwendung einer gemeinsamen Feder kann die Anzahl der Bauteile verringert werden.

Es kann vorteilhaft sein, wenn der Rahmen zumindest abschnittsweise elastisch verformbar, vorzugsweise elastisch biegeverformbar ist, und bevorzugt zumindest abschnittsweise aus einem elastischen Material gefertigt ist. Durch Verwendung eines zumindest abschnittsweise elastisch verformbaren Rahmens kann auf den Einbau gesonderter Gelenkbauteile ggf. verzichtet werden und die Herstellung des Rahmens vereinfacht werden.

Es kann sich als günstig erweisen, wenn der Kupplungsabschnitt und der andere Abschnitt des Rahmens einstückig verbunden sind, wobei der Rahmen vorzugsweise einstückig ausgebildet ist. Dadurch kann die Herstellung des Rahmens weiter vereinfacht werden.

Es kann von Vorteil sein, wenn der piezoelektrische Aktor als Longitudinalaktor oder als Scheraktor ausgebildet ist, wobei der piezoelektrische Aktor vorzugsweise derart ausgerichtet ist, dass er sich im Wesentlichen tangential zum Umfang der Welle verformt. Diese Aktortypen haben sich für den beschriebenen Anwendungszweck als besonders vorteilhaft erwiesen. Bei dieser vorteilhaften Ausrichtung des Aktors kann die piezoelektrische Verformung besonders einfach in eine Drehbewegung des Kupplungsabschnitts um die Achse der Welle übersetzt werden. Es kann nützlich sein, wenn der Rahmen an einem feststehenden Strukturteil abgestützt ist, vorzugsweise momentabgestützt ist. Durch die Momentabstützung des Rahmens an einem feststehenden bzw. ortsfesten Strukturteil kann die Verformung des Rahmens effektiver in eine Drehbewegung des Kupplungsabschnitts um die Achse der Welle übersetzt werden.

Es kann zudem nützlich sein, wenn sich der Kupplungsabschnitt und die Welle in Gewindeeingriff befinden. Dabei kann der Gewindeeingriff direkt, d.h. mit unmittelbarem Kontakt zwischen Kupplungsabschnitt und Welle, oder indirekt, d.h. mit mittelbarem Kontakt zwischen Kupplungsabschnitt und Welle, beispielsweise über ein Zwischenteil wie etwa einer Nuss, sein. Es ergibt sich dadurch einerseits eine optimierte Kontaktgeometrie, die einen besonders effektiven Antrieb der Welle erlaubt, und andererseits die Möglichkeit, die rotatorische Bewegung der Welle in eine translatorische Verschiebung derselben umzusetzen.

In einer vorteilhaften Weiterbildung der Erfindung erfüllt der Kupplungsabschnitt wenigstens eine der folgenden Anforderungen:
- Der Kupplungsabschnitt ist im Wesentlichen starr ausgebildet, so dass er sich im Wesentlichen verformungsfrei über wenigstens einen Teil des Umfangs der Welle um die Achse der Welle drehen kann.
- Der Kupplungsabschnitt umgibt die Welle zumindest abschnittsweise, vorzugsweise über mehr als die Hälfte des Umfangs, bevorzugt vollumfänglich.
- Der Kupplungsabschnitt ist über mehr als die Hälfte des Umfangs der Welle an den Umfang der Welle anlegbar.
- Der Kupplungsabschnitt ist im Wesentlichen U-förmig oder O-förmig ausgebildet.
- Der Kupplungsabschnitt ist über ein Zwischenstück zur Bewerkstelligung eines Haft-Gleit-Antriebs kraftschlüssig mit der Welle koppelbar, wobei das Zwischenstück vorzugsweise wenigstens drei Klemmbacken umfasst, die bevorzugt regelmäßig um den Umfang der Welle angeordnet sind, um die Welle zwischen den Klemmbacken festzuklemmen, wobei die Klemmbacken besonders bevorzugt flexibel sind und in radialer Richtung und/oder in Umfangsrichtung bezogen auf die Achse der Welle verformbar sind.
- Der Kupplungsabschnitt ist mit wenigstens einem Rahmenabschnitt verbunden, vorzugsweise gelenkig verbunden, wobei sich der Rahmenabschnitt bevorzugt im Wesentlichen tangential zum Umfang der Welle erstreckt und durch piezoelektrische Verformung des Aktors im Wesentlichen tangential zum Umfang der Welle verformt und/oder verschoben wird, wobei die Klemmbacken besonders bevorzugt flexibel sind und in radialer Richtung und/oder in Umfangsrichtung bezogen auf die Achse der Welle verformbar sind.
- Der Kupplungsabschnitt ist mit zwei parallelen Rahmenabschnitten verbunden, vorzugsweise gelenkig verbunden, wobei sich die Rahmenabschnitte bevorzugt im Wesentlichen tangential zum Umfang der Welle erstrecken und durch eine piezoelektrische Verformung des Aktors in entgegen gesetzten Richtungen im Wesentlichen parallel zueinander verformt und/oder verschoben werden.

Durch die oben genannten Merkmale lassen sich besonders bevorzugte Ausführungsformen des erfindungsgemäßen piezoelektrischen Drehantriebs realisieren.

Weitere vorteilhafte Weiterbildung der Erfindung ergeben sich durch Kombinationen der in den Ansprüchen, in der Beschreibung und in den Zeichnungen offenbarten Merkmale.

### Kurze Beschreibung der Zeichnungen

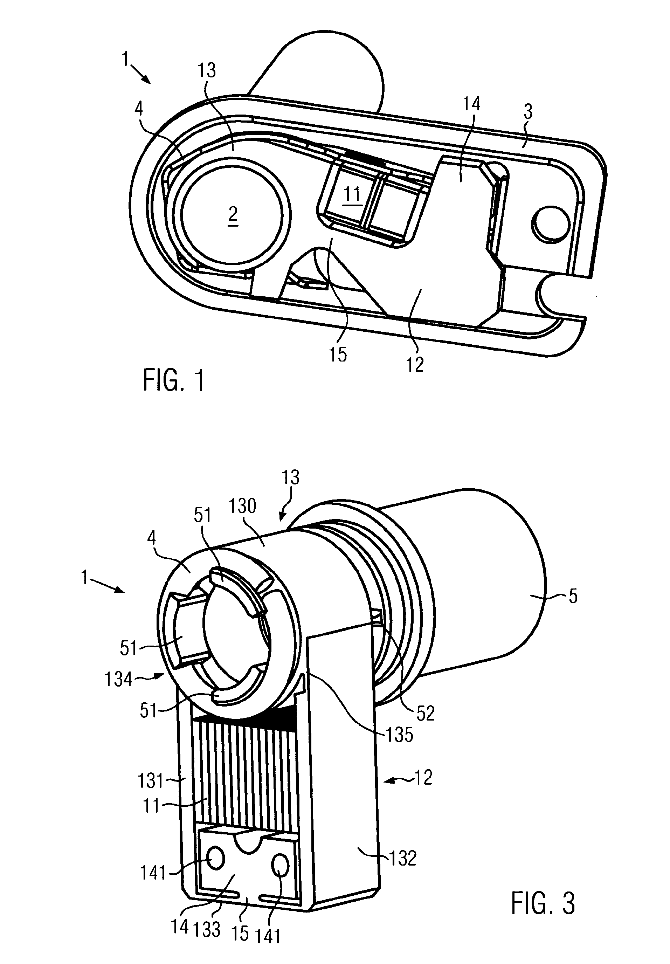

- Fig. 1: zeigt eine perspektivische Ansicht eines piezoelektrischen Drehantriebs nach dem ersten Ausführungsbeispiel der Erfindung.

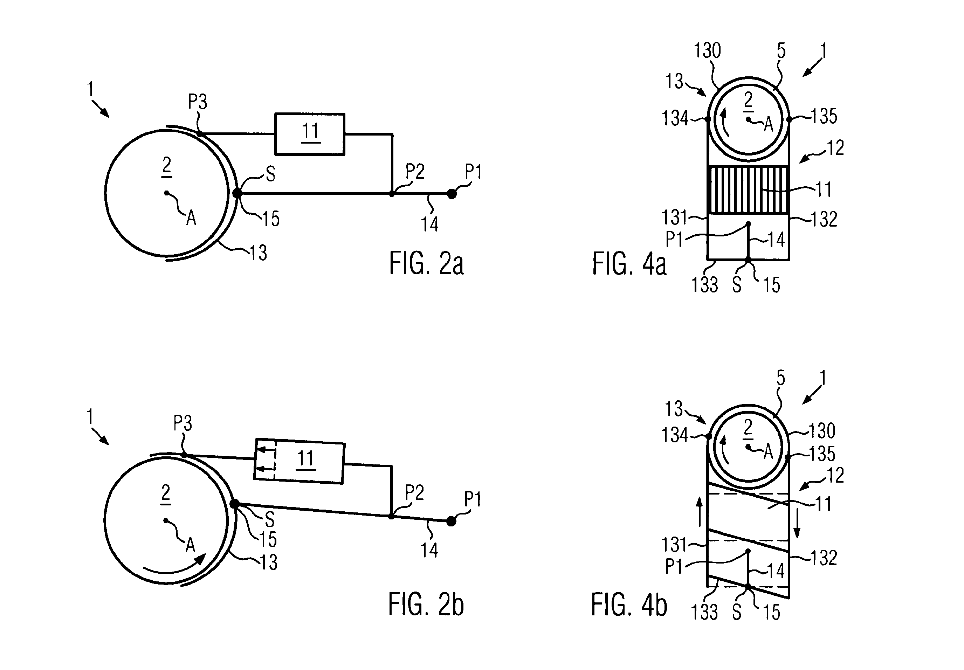

- Fig. 2: zeigt ein schematisches mechanisches Modell des piezoelektrischen Drehantriebs nach dem ersten Ausführungsbeispiel der Erfindung in verschiedenen Ansichten, wobei sich der piezoelektrische Drehantrieb in Ansicht (a) in einer Neutralstellung und in Ansicht (b) in einer Auslenkstellung befindet.
- Fig. 3: zeigt eine perspektivische Ansicht eines piezoelektrischen Drehantriebs nach dem zweiten Ausführungsbeispiel der Erfindung.
- Fig. 4: zeigt ein schematisches mechanisches Modell des piezoelektrischen Drehantriebs nach dem zweiten Ausführungsbeispiel der Erfindung in verschiedenen Ansichten, wobei sich der piezoelektrische Drehantrieb in Ansicht (a) in einer Neutralstellung und in Ansicht (b) in einer Auslenkstellung befindet.

### Detaillierte Beschreibung der bevorzugten Ausführungsbeispiele

Die bevorzugten Ausführungsbeispiele werden nachstehend mit Bezug auf die beiliegenden Figuren erläutert.

### Erstes Ausführungsbeispiel

Nach dem ersten Ausführungsbeispiel der Erfindung umfasst der piezoelektrische Drehantrieb 1 für wenigstens eine Welle 2, die mit einem Außengewinde versehen ist, einen piezoelektrischen Aktor (bzw. Piezoaktor oder Aktor) 11 und einen verstellbaren und/oder verformbaren Rahmen 12 mit einem Kupplungsabschnitt 13, der ein zum Außengewinde der Welle komplementäres Innengewinde aufweist und zur Bewerkstelligung eines Haft-Gleit-Antriebs kraftschlüssig mit der Welle 2 koppelbar ist, wobei der Rahmen 12 eine piezoelektrische Verformung des Aktors 11 mechanisch derart übersetzt, dass sich der Kupplungsabschnitt 13 über wenigstens einen Teil des Umfangs der Welle 2 um die Achse A der Welle 2 dreht. Der Kupplungsabschnitt 13 ist über ein Festkörpergelenk 15 mit wenigstens einem anderen Abschnitt 14 des Rahmens 12 gelenkig verbunden, wobei der Kupplungsabschnitt 13 und der andere Abschnitt 14 des Rahmens 12 über das Gelenk 15 gegeneinander verschwenkbar sind. Dieser andere Abschnitt 14 des Rahmens 12 ist als Abstützabschnitt ausgebildet, welcher an der Rahmenhalterung 3 - einem feststehenden Strukturteil - momentabgestützt ist, so dass der andere Abschnitt 14 des Rahmens 12 gegenüber der Rahmenhalterung 3 beweglich gelagert ist.

Der Haft-Gleit-Antrieb wird in der oben beschriebenen Weise durch elektrische Ansteuerung des piezoelektrischen Aktors 11 und die daraus resultierende piezoelektrische Verformung des Aktors 11 bewirkt.

Der Rahmen 12 ist im vorliegenden Fall einstückig aus einem elastisch verformbaren Material wie bspw. Kunststoff und/oder Metall ausgebildet. Der mit einem Innengewinde versehene Kupplungsabschnitt 13 ist im Wesentlichen U-förmig ausgebildet und umgibt die ein Außengewinde aufweisende Welle 2 über mehr als die Hälfte ihres Umfangs. Die Abschnitte 13, 14 sind durch elastische Biegeverformung des Rahmens 12 im Bereich des Festkörpergelenks 15, die durch die piezoelektrische Verformung des Aktors 11 bewirkt wird, gegeneinander verschwenkbar. Das Festkörpergelenk 15 wird durch einen Bereich verminderter Biegesteifigkeit relativ zu den zwei angrenzenden Abschnitten 13, 14 mit höherer Biegesteifigkeit erreicht, bspw. durch eine Einschnürung zwischen den Abschnitten 13, 14. Beim Verschwenken der beiden Abschnitte 13, 14 um eine gemeinsame Schwenkachse S, die sich im Wesentlichen parallel zur Achse A der Welle 2 erstreckt und zwischen beiden Abschnitten 13, 14 befindet, verschiebt sich das Gelenk 15 bzw. die Schwenkachse S im Wesentlichen in Umfangsrichtung der Welle 2, so dass der Kupplungsabschnitt 13 durch Betätigung des piezoelektrischen Aktors 11 eine Drehbewegung um die Achse A der Welle 2 ausführt.

Durch eine Federklammer 4 wird der Kupplungsabschnitt 13 mit einer Klemmkraft beaufschlagt, um einerseits den Anpressdruck des Kupplungsabschnitts 13 an die Welle 2 zu erhöhen und andererseits die beiden Abschnitte 13, 14 des Rahmens 12 durch die Federklammer 4 gegen den piezoelektrischen Aktor 11 zu drücken, so dass die Abschnitte 13, 14 einer piezoelektrischen Verformung des Aktors 11 stets folgen. Hierbei kann es vorteilhaft sein, wenn der Aktor 11 zusätzlich mit dem Rahmen 12 fest verbunden ist, beispielsweise durch Verklebung.

Die Funktionsweise des piezoelektrischen Drehantriebs nach dem ersten Ausführungsbeispiel wird nachstehend anhand des in Fig. 2 gezeigten schematischen mechanischen Modells erläutert, wobei der piezoelektrische Drehantrieb in den Ansichten (a) und (b) in zwei verschiedenen Stellungen dargestellt ist.

In dem schematischen mechanischen Modell gemäß Fig. 2 wird vereinfachend angenommen, dass der Abstützabschnitt 14 an einem ersten Punkt P1 an der feststehenden Rahmenhalterung 3 momentabgestützt ist und der piezoelektrische Aktor 11 an einem zweiten Punkt P2 mit dem Abstützabschnitt 14 sowie an einem dritten Punkt P3 mit dem Kupplungsabschnitt 13 gekoppelt ist. Der piezoelektrische Aktor 11 wird dabei durch das Federelement (in Fig. 2 nicht dargestellt) zwischen den beiden Abschnitten 13, 14 eingeklemmt. Der Aktor 11 ist vorzugsweise so ausgerichtet, dass die Arbeitsrichtung (bzw. die Richtung der piezoelektrischen Verformung) des Aktors 11 im Wesentlichen tangential zum Umfang der Welle 2 verläuft. Auch andere Ausrichtungen und Befestigungen des Aktors 11 sind denkbar. Die beiden Abschnitte 13, 14 sind durch das Festkörpergelenk 15 gelenkig verbunden und über die Schwenkachse S gegeneinander verschwenkbar. Der Punkt P1 und die Achse A der Welle 2 werden als ortsfest angenommen. Durch eine piezoelektrische Verformung des Aktors 11 kann der Abstand der Punkte P2 und P3 verändert werden. Durch die gelenkige Kopplung beider Abschnitte 13, 14 über das Festkörpergelenk 15 wird die Abstandsänderung der Punkte P2 und P3 in eine Schwenkbewegung um die Schwenkachse S überführt. Dabei wird der Rahmen 12 im Bereich des Festkörpergelenks 15 biegeverformt und der Kupplungsabschnitt 13 dreht sich um die Achse A der Welle 2. Das Gelenk 15 verschiebt sich beim Verschwenken beider Abschnitte 13, 14 im Wesentlichen in Umfangsrichtung der Welle 2. Durch eine Ausdehnung des piezoelektrischen Aktors 11 aus der in Fig. 2a gezeigten Neutralstellung wird bspw. der Abstand der Punkte P2 und P3 vergrößert und der Kupplungsabschnitt 13 entgegen dem Uhrzeigersinn um die Achse A der Welle 2 verdreht. Die daraus resultierende Auslenkstellung ist in Fig. 2b gezeigt. Durch eine anschließende Kontraktion des piezoelektrischen Aktors 11 in entgegen gesetzter Richtung wird wieder die Neutralstellung gemäß Fig. 2a erreicht. Die Welle 2 kann unter Nutzung des oben beschriebenen Haft-Gleit-Effekts wahlweise im oder entgegen dem Uhrzeigersinn angetrieben werden, je nachdem, ob zunächst eine langsame oder schnelle Ausdehnung mit einer sich daran anschließenden schnellen bzw. langsamen Kontraktion des piezoelektrischen Aktors realisiert ist.

### Zweites Ausführungsbeispiel

Das zweite Ausführungsbeispiel der Erfindung basiert maßgeblich auf dem ersten Ausführungsbeispiel. In der nachstehenden Beschreibung werden für gleiche Merkmale die gleichen Bezugszeichen verwendet und im Wesentlichen die Unterschiede zum ersten Ausführungsbeispiel beschrieben.

Nach dem zweiten Ausführungsbeispiel der Erfindung, das perspektivisch in Fig. 3 dargestellt ist, ist der Kupplungsabschnitt 13 des Rahmens 12 vollumfänglich um die Welle (nicht dargestellt) geschlossen und über ein gesondertes Zwischenelement 5 zur Bewerkstelligung des vorstehend beschriebenen Haft-Gleit-Effekts kraftschlüssig (mittelbar) mit der Welle koppelbar. Dieses Zwischenelement 5 ist mit dem Rahmen 12 fest verbunden (z.B. durch Verklebung) und weist im vorderen Endabschnitt drei konzentrische Ringabschnitte 51 als Klemmbacken auf, welche in (Gewinde-)Eingriff mit der Welle stehen. Die Ringabschnitte 51 werden vorzugsweise durch ein ringförmiges Federelement 4 an die Welle 2 angedrückt, um den Anpressdruck zu erhöhen. Der Kupplungsabschnitt 13 umfasst hier neben dem ringförmigen Teil 130, welcher die Welle umschließt, zwei im Wesentlichen parallele Rahmenabschnitte 131, 132, die sich im Wesentlichen tangential zu dem ringförmigen Teil 130 bzw. im Wesentlichen tangential zur Welle erstrecken und über einen Steg 133 verbunden sind. Die Rahmenabschnitte 131, 132 sind über Gelenke 134, 135, vorzugsweise Festkörpergelenke, an den ringförmigen Teil 130 gelenkig gekoppelt. Der Steg 133 ist wiederum über ein Festkörpergelenk 15 mit dem Abstützabschnitt 14 gelenkig verbunden, welcher sich an einem nicht gezeigten, feststehenden Strukturelement, z.B. einer Rahmenhalterung, abstützt. Montageöffnungen 141 sind bspw. zur Aufnahme von Montagebolzen vorgesehen. Im zweiten Ausführungsbeispiel der Erfindung findet ein Scheraktuator 11 Verwendung, welcher zwischen den Rahmenabschnitten 131, 132 angeordnet ist und durch entsprechende Ansteuerung eine parallele Verschiebung der Rahmenabschnitte 131, 132 erzeugt. Die Deformation des Rahmens 12 wird auf das Zwischenelement 5 übertragen, wodurch dieses im vorderen Abschnitt eine Rotationsbewegung um die Achse der Welle 2 ausführt. Diese Rotationsbewegung wird ermöglicht aufgrund von Stegen 52, die als Festkörpergelenk fungieren.

Die Funktionsweise des piezoelektrischen Drehantriebs nach dem zweiten Ausführungsbeispiel wird nachstehend anhand des in Fig. 4 gezeigten schematischen mechanischen Modells erläutert, wobei der piezoelektrische Drehantrieb in den Ansichten (a) und (b) in verschiedenen Stellungen dargestellt ist.

In dem schematischen mechanischen Modell gemäß Fig. 4 wird vereinfachend angenommen, dass der Abstützabschnitt 14 an einem ersten Punkt P1 mit einem nicht gezeigten, feststehenden Strukturelement gekoppelt ist und der piezoelektrische Scheraktor 11 zwischen den Rahmenabschnitten 131, 132 angeordnet ist, um durch entsprechende piezoelektrische Verformung eine parallele Verschiebung der Rahmenabschnitte 131, 132 zu erzeugen. Der Abstützabschnitt 14 ist mit dem Steg 133 des Kupplungsabschnitts 13 durch das Festkörpergelenk 15 gelenkig verbunden und über die Schwenkachse S zueinander verschwenkbar. Der Punkt P1 und die Achse A der Welle 2 werden als ortsfest angenommen. Durch eine piezoelektrische Scherverformung des Aktors 11 werden die Rahmenabschnitte 131, 132 parallel zueinander verschoben. Durch die gelenkige Kopplung des Stegs 133 an den Abschnitt 14 und die gelenkige Kopplung der Rahmenabschnitte 131, 132 an den ringförmigen Teil 130 wird die Verformung des Rahmens 12 mechanisch in eine Drehbewegung derart übersetzt, dass sich der ringförmige Teil 130 des Kupplungsabschnitts 13 um die Achse A der Welle 2 dreht. In der oben beschriebenen Weise wird die Drehbewegung des ringförmigen Teils 130 des Kupplungsabschnitts 13 über das Zwischenstück 5 auf die Welle 2 übertragen. Durch eine Scherverformung des piezoelektrischen Aktors 11 aus der in Fig. 2a gezeigten Neutralstellung wird bspw. der Rahmenabschnitt 131 nach oben und der Rahmenabschnitt 132 nach unten verschoben, so dass sich der ringförmige Teil 130 des Kupplungsabschnitts 13 im Uhrzeigersinn um die Achse A der Welle 2 dreht. Die daraus resultierende Auslenkstellung ist in Fig. 2b gezeigt. Durch die sich anschließende Rück-Scherverformung des piezoelektrischen Aktors 11 gelangt der Antrieb wieder in die Neutralstellung gemäß Fig. 2a. Je nachdem, ob die Scherverformung langsam oder schnell und die entsprechende Rück-Scherverformung in umgekehrter Weise schnell bzw. langsam vonstatten geht, kann die Welle 2 unter Nutzung des oben beschriebenen Haft-Gleit-Effekts wahlweise im oder entgegen dem Uhrzeigersinn angetrieben werden.

Zusammengefasst ergeben sich zwischen den Ausführungsbeispielen folgende Unterschiede:
Der Drehantrieb 1 nach dem ersten Ausführungsbeispiel ist wesentlich kompakter und einfacher aufgebaut und verwendet einen Longitudinalaktor. Die Drehung des Kupplungsabschnitts 13 um die Achse A der Welle 2 wird ermöglicht durch eine Schwenkbewegung um einen Abschnitt des Rahmens 12, der als Festkörpergelenk 15 fungiert. Der Kupplungsabschnitt 13 ist hierbei über ein Federelement 4 an die Welle 2 angepresst, wobei sich der Kupplungsabschnitt 13 und die Welle 2 in Gewindeeingriff befinden.

Der Drehantrieb 1 nach dem zweiten Ausführungsbeispiel ist deutlich komplexer aufgebaut; hier findet ein Scheraktuator Verwendung. Dieser erzeugt zunächst eine parallele Verschiebung der entsprechenden Rahmenabschnitte 131, 132. Mit dem Rahmen 12 fest verbunden - beispielsweise durch Verklebung - ist ein Zwischenelement 5 (z.B. eine Nuss), welches im vorderen Endabschnitt drei konzentrische Ringabschnitte 51 aufweist, welche als Klemmbacken dienen und in (Gewinde-)Eingriff mit der Welle 2 stehen. Die Deformation des Rahmens 12 wird auf das Zwischenelement 5 übertragen, wodurch dieses im vorderen Abschnitt eine Rotationsbewegung ausführt. Diese Rotationsbewegung wird ermöglicht aufgrund von Stegen 52, die als Festkörpergelenk fungieren.

## Patentansprüche

1. Piezoelektrischer Drehantrieb (1) für eine Welle (2), umfassend wenigstens einen piezoelektrischen Aktor (11) und einen verstellbaren und/oder verformbaren Rahmen (12) mit wenigstens einem Kupplungsabschnitt (13), der zur Bewerkstelligung eines Haft-Gleit-Antriebs kraftschlüssig mit der Welle (2) koppelbar ist, wobei der Rahmen (12) eine piezoelektrische Verformung des Aktors (11) mechanisch derart übersetzt, dass sich der Kupplungsabschnitt (13) über wenigstens einen Teil des Umfangs der Welle (2) um die Achse (A) der Welle (2) dreht und in einer Haft-Phase gemeinsam mit der Welle (2) dreht, wobei eine Feder (4) den Kupplungsabschnitt (13) und die Welle (2) zueinander vorspannt.

2. Piezoelektrischer Drehantrieb (1) nach Anspruch 1, wobei der Kupplungsabschnitt (13) über wenigstens ein Gelenk (15; 134, 135), vorzugsweise über ein Festkörpergelenk (15; 134, 135), mit wenigstens einem anderen Abschnitt (14; 131, 132) des Rahmens (12) gelenkig verbunden ist, so dass der Kupplungsabschnitt (13) und der andere Abschnitt (14) des Rahmens (12) über das Gelenk (15; 134, 135) gegeneinander verschwenkbar sind.

3. Piezoelektrischer Drehantrieb (1) nach wenigstens einem der vorangehenden Ansprüche, wobei sich das Gelenk (15; 134, 135) beim Verschwenken des Kupplungsabschnitts (13) gegen den anderen Abschnitt (14; 131, 132) des Rahmens (12) im Wesentlichen in Umfangsrichtung der Welle (2) verschiebt.

4. Piezoelektrischer Drehantrieb (1) nach wenigstens einem der vorangehenden Ansprüche, wobei eine Feder (4), vorzugsweise dieselbe Feder (4), den Kupplungsabschnitt (13) und die Welle (2) und/oder den Aktor (11) und/oder den anderen Abschnitt (14) des Rahmens (12) zueinander vorspannt.

5. Piezoelektrischer Drehantrieb (1) nach wenigstens einem der vorangehenden Ansprüche, wobei der Rahmen (12) zumindest abschnittsweise elastisch verformbar, vorzugsweise elastisch biegeverformbar ist, und bevorzugt zumindest abschnittsweise aus einem elastischen Material gefertigt ist.

6. Piezoelektrischer Drehantrieb (1) nach wenigstens einem der vorangehenden Ansprüche, wobei der Kupplungsabschnitt (13) und der andere Abschnitt (14) des Rahmens (12) einstückig verbunden sind, wobei der Rahmen (12) vorzugsweise einstückig ausgebildet ist.

7. Piezoelektrischer Drehantrieb (1) nach wenigstens einem der vorangehenden Ansprüche, wobei der piezoelektrische Aktor (11) als Longitudinalaktor oder als Scheraktor ausgebildet ist, wobei der piezoelektrische Aktor (11) vorzugsweise derart ausgerichtet ist, dass er sich im Wesentlichen tangential zum Umfang der Welle (2) verformt.

8. Piezoelektrischer Drehantrieb (1) nach wenigstens einem der vorangehenden Ansprüche, wobei der Rahmen (12) an einem feststehenden Strukturteil (3) abgestützt ist, vorzugsweise momentabgestützt ist.

9. Piezoelektrischer Drehantrieb (1) nach wenigstens einem der vorangehenden Ansprüche, wobei sich der Kupplungsabschnitt (13) und die Welle (2) in Gewindeeingriff befinden.

10. Piezoelektrischer Drehantrieb (1) nach wenigstens einem der vorangehenden Ansprüche, wobei der Kupplungsabschnitt (13) wenigstens eine der folgenden Anforderungen erfüllt:
a. der Kupplungsabschnitt (13) ist im Wesentlichen starr ausgebildet, so dass er sich im Wesentlichen verformungsfrei über wenigstens einen Teil des Umfangs der Welle (2) um die Achse (A) der Welle (2) drehen kann,
b. der Kupplungsabschnitt (13) umgibt die Welle (2) zumindest abschnittsweise, vorzugsweise über mehr als die Hälfte des Umfangs, bevorzugt vollumfänglich,
c. der Kupplungsabschnitt (13) ist über mehr als die Hälfte des Umfangs der Welle (2) an den Umfang der Welle (2) anlegbar,
d. der Kupplungsabschnitt (13) ist im Wesentlichen U-förmig oder O-förmig ausgebildet,
e. der Kupplungsabschnitt (13) ist über ein Zwischenstück (5) zur Bewerkstelligung eines Haft-Gleit-Antriebs kraftschlüssig mit der Welle (2) koppelbar, wobei das Zwischenstück (5) vorzugsweise wenigstens drei Klemmbacken (51) umfasst, die bevorzugt regelmäßig um den Umfang der Welle (2) angeordnet sind, um die Welle (2) zwischen den Klemmbacken (51) festzuklemmen, wobei die Klemmbacken (51) besonders bevorzugt flexibel sind und in radialer Richtung und/oder in Umfangsrichtung bezogen auf die Achse der Welle (2) verformbar sind,
f. der Kupplungsabschnitt (13) ist mit wenigstens einem Rahmenabschnitt (131, 132) verbunden, vorzugsweise gelenkig verbunden, wobei sich der Rahmenabschnitt (131, 132) bevorzugt im Wesentlichen tangential zum Umfang der Welle (2) erstreckt und durch piezoelektrische Verformung des Aktors (11) im Wesentlichen tangential zum Umfang der Welle (2) verformt und/oder verschoben wird,
g. der Kupplungsabschnitt (13) ist mit zwei parallelen Rahmenabschnitten (131, 132) verbunden, vorzugsweise gelenkig verbunden, wobei sich die Rahmenabschnitte (131, 132) bevorzugt im Wesentlichen tangential zum Umfang der Welle (2) erstrecken und durch eine piezoelektrische Verformung des Aktors (11) in entgegen gesetzten Richtungen im Wesentlichen parallel zueinander verformt und/oder verschoben werden.

## Claims

1. Piezoelectric rotary drive (1) for a shaft (2), comprising at least one piezoelectric actuator (11) and an adjustable and/or deformable frame (12) with at least one coupling portion (13) which can be coupled to the shaft (2) in a force-locked manner so as to accomplish a stick-slip drive, wherein the frame (12) mechanically translates a piezoelectric deformation of the actuator (11) such that the coupling portion (13) rotates about the axis (A) and during the stick phase together with the shaft (2) over at least a part of the circumference of the shaft (2), wherein a spring (4) pretensions the coupling portion (13) and the shaft (2) relative to each other.

2. Piezoelectric rotary drive (1) according to claim 1, wherein the coupling portion (13) is flexibly connected to at least one other portion (14; 131, 132) of the frame (12) by means of at least one hinge (15; 134, 135), preferably a flexure hinge (15; 134, 135), so that the coupling portion (13) and the other portion (14) of the frame (12) are pivotable relative to each other by the hinge (15; 134, 135).

3. Piezoelectric rotary drive (1) according to at least one of the preceding claims, wherein, when the coupling portion (13) is pivoted, the hinge (15; 134, 135) is displaced against the other portion (14; 131, 132) of the frame (12) substantially in the circumferential direction of the shaft (2).

4. Piezoelectric rotary drive (1) according to at least one of the preceding claims, wherein a spring (4), preferably the same spring (4), pretensions the coupling portion (13) and the shaft (2) and/or the actuator (11) and/or the other portion (14) of the frame (12) relative to each other.

5. Piezoelectric rotary drive (1) according to at least one of the preceding claims, wherein the frame (12) is at least section-wise elastically deformable, preferably elastically deformable through bending, and preferably at least section-wise made of an elastic material.

6. Piezoelectric rotary drive (1) according to at least one of the preceding claims, wherein the coupling portion (13) and the other portion (14) of the frame (12) are integrally connected, wherein the frame (12) is preferably formed in one piece.

7. Piezoelectric rotary drive (1) according to at least one of the preceding claims, wherein the piezoelectric actuator (11) is designed as a longitudinal actuator or as shear actuator, wherein the piezoelectric actuator (11) is preferably oriented to be deformed substantially tangentially to the circumference of the shaft (2).

8. Piezoelectric rotary drive (1) according to at least one of the preceding claims, wherein the frame (12) is supported, preferably moment-supported, on a stationary structure part (3).

9. Piezoelectric rotary drive (1) according to at least one of the preceding claims, **characterized in that** the coupling portion (13) and the shaft (2) are in a threaded engagement.

10. Piezoelectric rotary drive (1) according to at least one of the preceding claims, **characterized in that** the coupling portion (13) fulfills at least one of the following requirements:
a. the coupling portion (13) is formed to be substantially rigid allowing it to rotate about the axis (A) of the shaft (2) substantially without deformation over at least a part of the circumference of the shaft (2),
b. the coupling portion (13) surrounds the shaft (2) at least section-wise, preferably over more than half of the circumference, preferably over the full circumference,
c. the coupling portion (13) can be placed against the circumference of the shaft (2) over more than half of the circumference of the shaft (2),
d. the coupling portion (13) is formed substantially U-shaped or O-shaped,
e. the coupling portion (13) can be coupled to the shaft (2) in a force-locked manner using an intermediate piece (5) so as to accomplish a stick-slip drive, wherein the intermediate piece (5) preferably comprises at least three clamping jaws (51) which are arranged preferably regularly around the circumference of the shaft (2) so as to clamp the shaft (2) between the clamping jaws (51), wherein the clamping jaws (51) are particularly preferably flexible and are deformable in a radial direction and/or in a circumferential direction relative to the axis of the shaft (2),
f. the coupling portion (13) is connected, preferably hinged, to at least one frame portion (131, 132), wherein the frame portion (131, 132) extends preferably substantially tangentially to the circumference of the shaft (2) and is deformed and/or displaced by piezoelectric deformation of the actuator (11) substantially tangentially to the circumference of the shaft (2),
g. the coupling portion (13) is connected, preferably hinged, to two parallel frame portions (131, 132), wherein the frame portions (131, 132) extend preferably substantially tangentially to the circumference of the shaft (2) and are deformed and/or displaced substantially parallel to each other in opposite directions by a piezoelectric deformation of the actuator (11).

## Revendications

1. Entraînement de rotation piézoélectrique (1) pour un arbre (2), comprenant au moins un actionneur piézoélectrique (11) et un cadre (12) déplaçable et/ou déformable avec au moins un secteur de couplage (13) qui peut être couplé par adhérence à l'arbre (2) pour la réalisation d'un entraînement d'adhérence et de glissement, le cadre (12) convertissant mécaniquement une déformation piézoélectrique de l'actionneur (11), de façon telle que le secteur de couplage (13) tourne autour de l'axe (A) de l'arbre (2) sur au moins une partie de la périphérie de l'arbre (2) et tourne en commun avec l'arbre (2) lors d'une phase d'adhérence, un ressort (4) assurant une précontrainte du secteur de couplage (13) et de l'arbre (2) l'un contre l'autre.

2. Entraînement de rotation piézoélectrique (1) selon la revendication 1, dans lequel le secteur de couplage (13) est relié de manière articulée à au moins un autre secteur (14; 131, 132) du cadre (12) par l'intermédiaire d'au moins une articulation (15; 134, 135), de préférence par l'intermédiaire d'une articulation à corps solides (15; 134, 135), de sorte que le secteur de couplage (13) et ledit autre secteur (14) du cadre (12) peuvent pivoter l'un par rapport à l'autre par l'intermédiaire de l'articulation (15; 134, 135).

3. Entraînement de rotation piézoélectrique (1) selon l'une au moins des revendications précédentes, dans lequel l'articulation (15; 134, 135), lors du pivotement du secteur de couplage (13) à l'encontre de l'autre secteur (14; 131, 132) du cadre (12), se déplace sensiblement dans la direction périphérique de l'arbre (2).

4. Entraînement de rotation piézoélectrique (1) selon l'une au moins des revendications précédentes, dans lequel un ressort (4), de préférence ledit même ressort (4), assure la précontrainte du secteur de couplage (13) et de l'arbre (2) et/ou de l'actionneur (11) et/ou de l'autre secteur (14) du cadre (12) les uns contre les autres.

5. Entraînement de rotation piézoélectrique (1) selon l'une au moins des revendications précédentes, dans lequel le cadre (12) est déformable élastiquement au moins par secteurs, plus particulièrement déformable élastiquement en flexion, et est de préférence réalisé, au moins par secteurs, en un matériau élastique.

6. Entraînement de rotation piézoélectrique (1) selon l'une au moins des revendications précédentes, dans lequel le secteur de couplage (13) et ledit autre secteur (14) du cadre (12) sont reliés d'un seul tenant, le cadre (12) étant de préférence réalisé d'un seul tenant.

7. Entraînement de rotation piézoélectrique (1) selon l'une au moins des revendications précédentes, dans lequel l'actionneur piézoélectrique (11) est réalisé sous forme d'actionneur longitudinal ou d'actionneur en cisaillement, et l'actionneur piézoélectrique (11) est de préférence orienté de façon à se déformer sensiblement de manière tangentielle à la périphérie de l'arbre (2).

8. Entraînement de rotation piézoélectrique (1) selon l'une au moins des revendications précédentes, dans lequel le cadre (12) prend appui, de préférence à l'encontre d'un moment, contre une pièce de structure (3) en position fixe.

9. Entraînement de rotation piézoélectrique (1) selon l'une au moins des revendications précédentes, dans lequel le secteur de couplage (13) et l'arbre (2) se trouvent en prise par filetage.

10. Entraînement de rotation piézoélectrique (1) selon l'une au moins des revendications précédentes, dans lequel le secteur de couplage (13) satisfait à l'une au moins des exigences suivantes :
a. le secteur de couplage (13) est d'une configuration sensiblement rigide, de sorte qu'il est en mesure de tourner, sensiblement sans déformation, sur au moins une partie de la périphérie de l'arbre (2), autour de l'axe (A) de l'arbre (2),
b. le secteur de couplage (13) entoure l'arbre (2) au moins par secteurs, plus particulièrement sur plus de la moitié de la périphérie, de préférence sur toute la périphérie,
c. le secteur de couplage (13) peut s'appliquer contre la périphérie de l'arbre (2) sur plus de la moitié de la périphérie de l'arbre (2),
d. le secteur de couplage (13) est d'une configuration sensiblement en forme de U ou en forme de O,
e. le secteur de couplage (13) peut être couplé par une liaison par adhérence à l'arbre (2) par une pièce intermédiaire (5), pour la réalisation d'un entraînement d'adhérence et de glissement, la pièce intermédiaire (5) comprenant de préférence au moins trois mors de serrage (51), qui de préférence sont agencés de manière régulière autour de la périphérie de l'arbre (2), en vue de serrer l'arbre (2) entre les mors de serrage (51), les mors de serrage (51) étant plus particulièrement flexibles et déformables dans la direction radiale et/ou dans la direction périphérique en se référant à l'axe de l'arbre (2),
f. le secteur de couplage (13) est relié, de préférence relié de façon articulée, à au moins un secteur de cadre (131, 132), le secteur de cadre (131, 132) s'étendant de préférence sensiblement de manière tangentielle à la périphérie de l'arbre (2) et est déformé et/ou déplacé sensiblement de manière tangentielle à la périphérie de l'arbre (2), par déformation piézoélectrique de l'actionneur (11),
g. le secteur de couplage (13) est relié, de préférence relié de façon articulée, à deux secteurs de cadre (131, 132) parallèles, les secteurs de cadre (131, 132) s'étendant de préférence sensiblement de manière tangentielle à la périphérie de l'arbre (2) et étant déformés et/ou déplacés parallèlement l'un à l'autre dans des directions opposées, par une déformation piézoélectrique de l'actionneur (11).
